# EUROPEAN PATENT SPECIFICATION

(11) **EP 3 395 488 B1**
(45) Date of publication and mention of the grant of the patent: **20.11.2019**
(21) Application number: 17167786.7
(22) Date of filing: 24.04.2017
(51) Int. Cl.: B23K 20/12

(54) **METHOD FOR JOINING TWO PARTS BY FRICTION STIR WELDING**
VERFAHREN ZUR VERBINDUNG VON ZWEI TEILEN DURCH REIBRÜHRSCHWEISSEN
PROCÉDÉ D'ASSEMBLAGE DE DEUX PIÈCES PAR SOUDAGE PAR FRICTION MALAXAGE

(43) Date of publication of application: 31.10.2018
(73) Proprietor: RUAG Aerospace Structures GmbH, 82205 Gilching (DE)
(72) Inventor: Becker, Robert, 82110 Germering (DE); Grigoleit, Teresa, 85635 Höhenkirchen (DE); Yip, Eddy, 81377 München (DE)
(74) Representative: Maiwald Patent- und Rechtsanwaltsgesellschaft mbH

(56) References cited:
- EP-A2- 1 894 661
- GB-A- 2 455 086
- JP-A- 2004 174 507
- KR-B1- 101 666 964

## Description

### FIELD OF THE INVENTION

The invention relates to a method for joining two parts by friction stir welding.

### BACKGROUND OF THE INVENTION

Friction stir welding (FSW) is a method for joining a plurality of parts together. Without limitation, said parts can be made of metal or metal alloys, e.g. steel or aluminium. In such a method a protrusion is typically provided at a tip of a welding tool. The welding tool rotates and is pressed against a welding target portion of the parts to be joined, so that the welding target portion and its surrounding portion are softened due to frictional heat and the welding target portion and its surrounding portion, which have been softened, are stirred and thereby a plastic flow is caused. After removing the tool from the welding target portion the latter is cooled down and the plurality of parts are joined together.

Friction stir welding can be applied for manufacturing covers or panels of a fuselage of an aircraft, a hull element for a ship or a boat, or a bodywork element for a vehicle such as a car, a truck, a bus or a train. In many applications, elements need to be inserted into corresponding recesses of aforesaid covers, panels, hull or bodywork elements. Such elements particularly fulfil stiffening functions and are often designed as closed elements, i.e. comprising a closed cross-section. For example, when manufacturing a panel of a fuselage of an aircraft, a window frame may be joined with a skin panel of a fuselage by friction stir welding. Other elements, which often have to be joined to a fuselage of an aircraft by friction stir welding are e.g. a stiffening element for a manhole, a handhole, a hole for a system breakthrough or a service panel, a door frame, and a doubler. Thus, friction stir welding is often used for joining two parts, wherein a first part comprises a recess for receiving a second part, and wherein the second part is joined to the first part while being received in said recess.

There is a need - in particular when manufacturing a panel for a fuselage of an aircraft - for joining two parts by friction stir welding, wherein the two parts can be provided with high accuracy, i.e. with very low tolerances, in an area of a weld seam to be generated by the friction stir welding process. Furthermore, cracks due to lack of penetration of the weld seam between the joined parts need to be avoided and a surface protection of the joined parts shall not impede the friction stir welding process.

Document JP-A-2004174507 discloses a stir welding device and method involving a heating unit which restrains temperature difference between the joining tool-side and reverse-side surface portion of a joined object during a friction stirring operation. The presence of a recess, the insertion of a part into the recess of the other part and its warming are not disclosed in said document.

### SUMMARY OF THE INVENTION

It is an object of the present invention to provide a method for joining two parts by friction stir welding, wherein the method fulfils at least one of the aforementioned needs.

The problem is solved by the subject matter according to the independent claims. The dependent claims, the following description and the drawings show preferred embodiments of the invention.

According to a first aspect of the invention, a method for joining two parts by friction stir welding is provided. The method comprises the step of providing a first part and a second part to be joined to the first part, wherein the first part comprises a recess for receiving the second part. Both, the first part and the second part, may be provided in a non-shrunk state, initially.

Before being provided, the first part can be formed into an intended shape. In particular, a contour of the first part can be trimmed. The recess of the first part can be cut-out by milling. Similarly, before being provided, the second part can be formed into an intended shape. In particular, a contour of the second part can be trimmed or milled.

Suitable materials for the first part are e.g. aluminium, titanium, and steel. Furthermore, various alloys of these materials and combinations of them (hybrid materials) are suitable. The same applies for the second part. The material of the first part can be the same as the material of the second part. Alternatively, the material of the first part can be different from the material of the second part. A thickness range of the joined parts can be between 1 mm and 10 mm. Possible joined configurations can be butt joints and tailor welded blanks (TWB).

The first part can be e.g. a cover or a panel of a fuselage of an aircraft, a hull element for a ship or a boat, or a bodywork element of a vehicle such as a car, a truck, a bus or a train. The second part can be an element fulfilling a stiffening function and may have a closed profile, i.e. comprising a closed cross-section. For example, the second part can be a window frame of a window, a stiffening element for a manhole, a handhole, a hole for a system breakthrough or a service panel, a door frame, or a doubler. In the following, the method according to the first aspect of the invention is - without limitation - mainly described in the context of joining a window frame of a window (as a second part) to a panel of a fuselage of an aircraft (as a first part).

The recess can comprise an internal shape and an internal perimeter. In the aforesaid example of joining the window frame to the panel of the fuselage, the recess can be an opening and e.g. comprise an oval form. The second part, e.g. the window frame, can provide a contact element having an external shape, e.g. oval formed, and an external perimeter. The external shape of the contact element of the second part, e.g. the window frame, corresponds to the internal shape of the recess of the first part.

The second part is cooled, such that the second part shrinks and can be inserted with lower resistance into the recess of the first part compared to a non-shrunk state of the second part. The shrinking of the second part by cooling, e.g. the window frame, allows an easier fitting and positioning of the second part into the recess of the first part. Furthermore, the shrinking of the second part allows that a size of the second part in a nominal state can be larger than a size of the recess of the first part in a nominal state. In particular, the external perimeter of the second part, e.g. the window frame, can be larger than the internal perimeter of the recess of the first part, e.g. the recess of the panel of the fuselage of the aircraft.

The cooled and, thus, shrunk second part is inserted with particular low resistance into the recess of the first part. After being inserted, the second part is warmed, such that the second part is pressed against the recess of the first part. Aforesaid warming can be achieved actively, e.g. by applying heat generated by known heating means to the second part. Additionally or alternatively, the warming can also be achieved passively, e.g. by a heat flow from the first part, e.g. the panel of the fuselage, to the second part, e.g. the window frame. Warming of the second part leads to an expansion of the external perimeter of the contact element of the second part, e.g. the window frame, such that the external perimeter increases and possible gaps between the contact element of the second part and the recess of the first part are filled by the contact element of the second part. In other words, a "zero gap" is achieved by the above-described shrink fitting and subsequent expansion of the second part into the recess of the first part, e.g. the shrink fitting and subsequent expansion of the window frame into the recess of the panel of the fuselage of the aircraft. Therefore, the shrink fitting and subsequent expansion enables to fulfil high requirements with regards to tolerances of the first part and the second part and, furthermore, provides a very effective sealing between the first part and the second part.

Subsequently, the second part is joined to the first part by means of friction stir welding. Due to the condition that the second part is inserted into the recess of the first part, the second part preferably is welded to the first part by means of friction stir welding, wherein a weld seam generated by said friction stir welding surrounds the second part. In other words, the weld seam preferably extends circumferentially around the second part. The weld seam may consist of material of the first part and of the second part.

As mentioned above, the size of the second part can be larger than the size of the recess of the first part, both in a nominal state. In this context "nominal state" can mean that, if the first part and the second part have the same temperature and, furthermore, if the second part would not have been inserted in the above-described way into the recess of the first part, the second part would be bigger than the first part. Therefore, in said nominal state, the bigger second part overlaps the smaller first part, if the second part is laid over the recess of the first part. For example, if a window frame has to be inserted into a recess of a panel of a fuselage for an aircraft as described above, the overlap can be in the range of 0.1 mm, wherein individual part tolerances can be in the range of +/- 0.05 mm. Therefore, a total overlap may be in a range of 0 mm to 0.2 mm.

Overlap values and tolerance values can be selected depending on a size of the individual parts and requirements. In particular, an overlap value can be determined such that stresses acting on the first part and the second part due to the overlap are kept below a critical value which when exceeded could lead to a damage of the first part and/or the second part. Furthermore, an overlap value can depend on the size of the second part. For example, an overlap value of a relatively small second part can be determined lower than an overlap value of a relatively large second part, because particularly high efforts are required to shrink the relatively small second part by cooling. Also, a tolerance value of the relatively small second part may be determined lower than a tolerance value of the relatively large second part.

According to an embodiment of the invention, the second part is cooled such that an outer perimeter of the second part is smaller than an inner perimeter of the recess of the first part, wherein the second part is inserted into the recess of the first part, such that there is a gap between the recess of the first part and the outer perimeter of the second part, and wherein the second part is warmed such that the outer perimeter of the second part expands and the gap is filled by the second part. This embodiment enables a particularly easy fitting and positioning of the second part within the recess of the first part, because due to the gap the second part can "fall" into the recess of the first part. A difference temperature of the second part, i.e. a difference between a first temperature at which the second part is not shrunk by cooling and a second temperature at which the second part is shrunk by cooling, can be determined such that aforesaid falling of the second part into the recess of the first part is enabled. Furthermore, the subsequent warming of the second part enables that the second part automatically aligns itself in an intended way to the first part as the second part expands again after being shrunk.

According to another embodiment of the invention, the first part and the second part do not comprise a surface protection layer during joining the second part to the first part by means of friction stir welding. In other words, the first part and the second part can both be in a semi-finished state when being joined by friction stir welding. This embodiment enables that the surface protection layer does not have to be removed prior to the friction stir welding step. Therefore, the method according to this embodiment is particularly effort saving, fast and cheap. Furthermore, the risk that potential remaining rests of the surface protection layer could impede or decrease the quality of the weld seam generated by the friction stir welding can be minimised by this embodiment of the invention.

The method can further comprise the step of coating a surface of the first part and/or the second part with a surface protection layer after joining the second part to the first part by means of friction stir welding. This embodiment enables that the surface of the first part and/or the second part is protected. Furthermore, also a weld seam generated by the step of joining the second part of the first part by friction stir welding can be coated with the surface protection layer. Therefore, also the weld seam can be protected by the surface protection layer. This is not the case, if - according to the state-of-the-art - the surface protection layer is coated onto the parts before the step of friction stir welding.

The cooling of the second part can be carried out in a freezing apparatus. For example, the second part can be cooled by such a freezing apparatus down to a temperature value of -50° C.

Furthermore, the second part can be cooled by liquid nitrogen. By using liquid nitrogen, the second part can be cooled down to temperature values of approximately -200° C, thus allowing a relatively high shrinking of the second part.

According to another embodiment, a weld seam is generated by joining the second part to the first part by means of friction stir welding, and the method further comprises the step of removing material of the weld seam in an area of a back surface of the weld seam. The weld seam consists of material of the first part and of the second part. In this context, the feature "area of a back surface of the weld seam" can be understood as designating the area of the weld seam that is facing away from a tool for friction stir welding, in particular from a welding pin tip of such a tool, by which the weld seam has been generated.

Referring back to the example of joining a window frame to a panel of a fuselage for an aircraft, the window frame is typically inserted into a recess of the panel and joined to the panel by friction stir welding from the outside. By "the outside" that side is meant which is intended to be the outside of the aircraft, if the panel of the fuselage is mounted to the aircraft. According to this example, the area of a back surface of the weld seam is orientated such that it faces the inside. In this context, the term "the inside" means that side which is intended to be the inside of the aircraft, if the panel of the fuselage is mounted to the aircraft.

In the area of the back surface of the weld seam, a lack of penetration (LOP) can occur. This lack of penetration can lead to cracks within the joint between the first part and the second part. These cracks may lead to a decreased strength of the joint between the first part and the second part. However, due to the proposed step of removing material of the weld seam in the area of the back surface of the weld seam, potential cracks due to a lack of penetration can be removed, thus increasing the stability - or at least not leading to a decreased stability - of the joint between the first part and the second part.

Furthermore, the material can be removed during a pocketing of the first part and/or the second part and the weld seam after joining the second part to the first part by means of friction stir welding. In this context, "pocketing" defines a step of the method, in which material of the first part and/or the second part is removed in a surface area of the first part and/or the second part. Said removing can be done e.g. by milling. The pocketing results into at least one recess in the surface areas in which the material has been removed. These recess can be called a pocket. Said removing of material can be done stepwise, wherein in each step a predetermined amount of material can be removed. The pocketing generally enables to safe weight due to the removed material. This weight saving process step is typically done anyway. In the context of the present invention, the pocketing is applied in the area of the back surface of the weld seam, too, which may contain cracks due to a potential lack of penetration. Therefore, by means of the pocketing the material of the weld seam in the area of the back surface of the weld seam is already removed. Therefore, this embodiment enables to save an additional step for removing the material of the weld seam in the area of the back surface of the weld seam, thus making the method particularly efficient.

According to another embodiment, an end hole is generated by joining the second part to the first part by means of friction stir welding, wherein the method further comprises the step of closing the end hole by a rivet. Such an end hole is typically generated when the welding tool is drawn out of a welding zone between the first part and the second part. This end hole is not desired. The proposed riveting of the end hole leads to a filling of the end hole with the rivet. This embodiment provides an effective, easy and cheap method for filling the end hole.

Furthermore, the method can comprise the step of evaluating the joint of the second part to the first part by means of dye penetrant inspection. Such an evaluation is known and typically done anyway for evaluating the surface quality of the joined parts. Using this evaluation for additionally evaluating the joint between the second part and the first part is effective and effort saving.

### BRIEF DESCRIPTION OF THE DRAWINGS

In the following description exemplary embodiments of the invention are explained with reference to the accompanying schematic drawing in which
- Fig. 1: shows a perspective view of a first part with a recess and a second part to be joined with the first part,
- Fig. 2: a perspective view of the first part and the second part shown by Fig. 1, wherein the second part has been inserted into the first part,
- Fig. 3: an alternative perspective view of the first part and the second part shown by Fig. 1, wherein the second part has not yet been inserted into the first part,
- Fig. 4: an alternative perspective view of the first part and the second part as per Fig. 3, wherein the second part has been inserted into the first part,
- Fig. 5: a front elevation of a first part with a recess, wherein a second part has been shrunk by cooling and inserted into the recess,
- Fig. 6: a perspective view of a first part with two recesses each for receiving one second part, wherein the second parts have been shrunk by cooling,
- Fig. 7: another perspective view of the first part and the second parts as per Fig. 6, wherein the second parts have been inserted and expanded into the recesses of the first part, and wherein the second parts have been joined to the first part by means of friction stir welding,
- Fig. 8: another perspective view of the first part and the second parts as per Fig. 6 after the friction stir welding step and after a pocketing step,
- Fig. 9: a cross-sectional view of a first part and a second part being joined by friction stir welding showing a crack in a weld seam,
- Fig. 10: a cross-sectional view of the first part, the second part and the weld seam as per Fig. 9, wherein the crack has been removed by a pocketing step,
- Fig. 11: a front elevation of the parts as per Fig. 5, wherein the parts have been joined by friction stir welding, and wherein an end hole of a weld seam has been filled by a rivet,
- Fig. 12: a cross-sectional view of a first part and a second part being joined by friction stir welding, wherein an end hole of a weld seam has been filled by a rivet, and
- Fig. 13: a flowchart of process steps of an embodiment of a method according to the present invention.

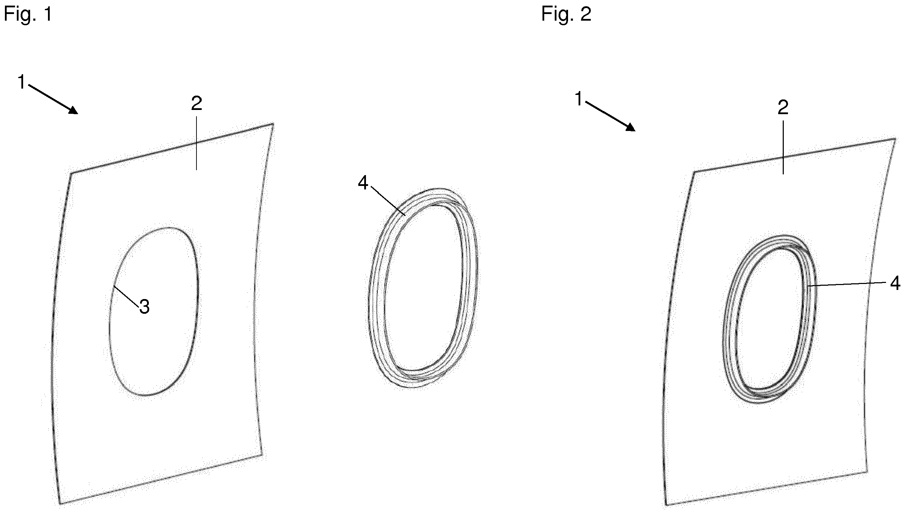

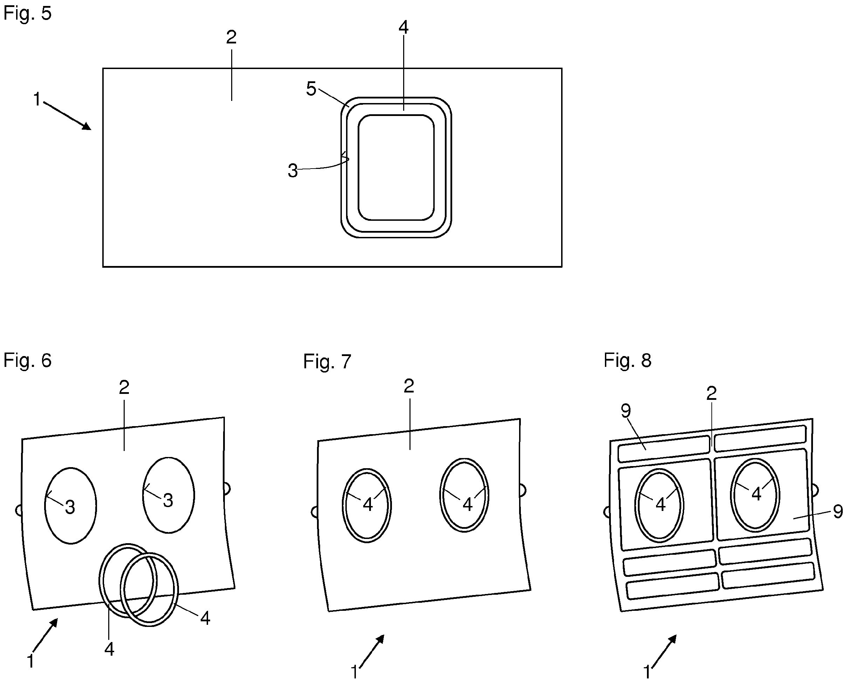

Figs. 1 to 4 show a panel 1 comprising a large-area first part 2 with a recess 3 and a second part 4 which has to be joined to the first part 2. Figs. 6 to 8 show a similar panel 1, comprising a large-area first part 2 with two recess 3 and two second parts 4 which have to be joined to the first part 2. The following explanations in context with the embodiments per Figs. 1 to 4 apply mutatis mutandis for the embodiments as per Figs. 6 to 8, similarly.

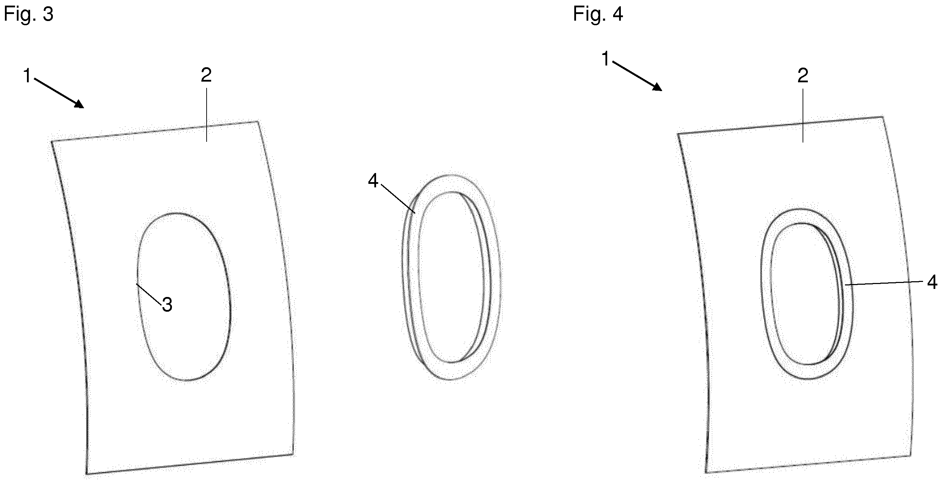

The panel 1 can form an element of a fuselage of an aircraft (not shown). Figs. 1 and 3 show the second part 4 not yet being joined to the first part 2, whereas Figs. 2 and 4 show the second part 4 being joined to the first part 2. Figs. 1 and 2 show the panel 1 from the inside, whereas Figs. 3 and 4 show the panel 1 from the outside. By "the outside" that side is meant which is intended to be the outside of the aircraft, if the panel 1 of the fuselage is mounted to the aircraft. By the term "the inside" that side is meant which is intended to be the inside of the aircraft, if the panel 1 of the fuselage is mounted to the aircraft.

The recess 3 comprises an internal shape and an internal perimeter. In the shown example, the recess 3 is an opening and comprises an oval form. The second part 4 can be a window frame of a window. The window frame 4 provides an outer contact element for actually being joined to the first part 2 in the area of the recess 3. The window frame 4 has an external shape, e.g. oval formed, and an external perimeter. The external shape of the window frame 4 corresponds to the internal shape of the recess 3 of the first part 2.

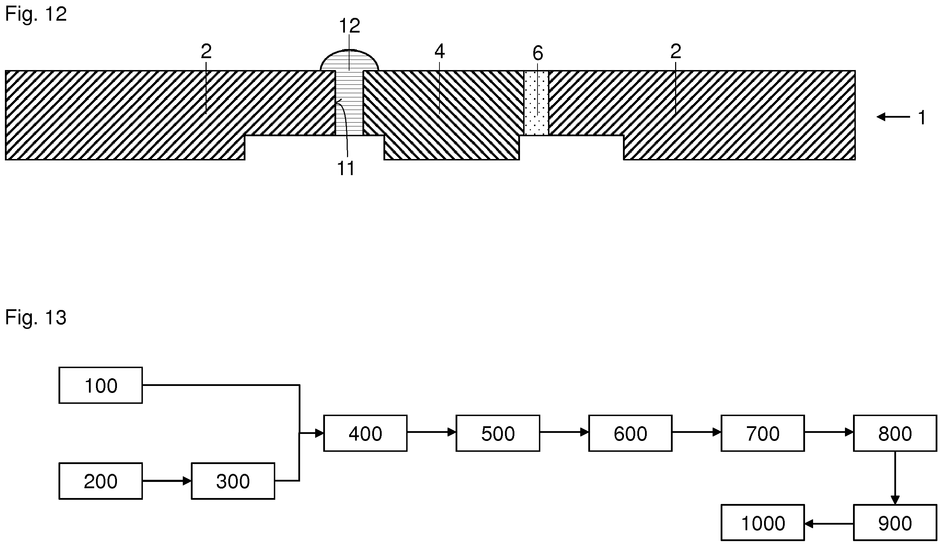

To provide the first part as shown by Figs. 1 and 3, the first part 2 can be formed into an intended shape in a step 100 (c.f. Fig. 13). In particular, a contour of the first part 2 can be trimmed. The recess 3 of the first part 2 can be cut-out by milling. Similarly, to provide the window frame 4 as shown by Figs. 1 and 3, the window frame 4 can be formed into an intended shape in a step 200 (c.f. Fig. 13). In particular, a contour of the window frame 4 can be trimmed or milled. Steps 100 and 200 can be done simultaneously in order to save time. Preferably, the first part 2 and the window frame 4 are not provided with a surface protection layer in steps 100 and 200, such that they can be joined by friction stir welding in a subsequent step 700 (as described below) without a surface protection layer.

Suitable materials for the first part 2 are e.g. aluminium, titanium, and steel. Furthermore, various alloys of these materials and combinations of them (hybrid materials) are suitable. The same applies for the window frame 4. The material of the first part 2 can be the same as the material of the window frame 4. Alternatively, the material of the first part 2 can be different from the material of the window frame 4. A thickness range of the joined parts can e.g. be between 1 mm and 10 mm.

After the window frame 4 has been formed into its intended shape in step 200, the size of the window frame 4 is larger than the size of the recess 3 of the first part 2 (overlap or oversize). In this nominal state, inserting the window frame 4 into the recess 3 would require high forces (if possible at all) due to the overlap or oversize of the window frame 4. For example, the overlap can be in the range of 0.1 mm, wherein individual part tolerances can be in the range of +/- 0.05 mm. Therefore, a total overlap may be in a range of 0 mm to 0.2 mm.

In a subsequent step 300 the window frame 4 is cooled, such that the window frame 4 shrinks and can be inserted with lower resistance into the recess 3 of the first part 2 compared to a non-shrunk state of the window frame 4. In other words, the aforesaid overlap or oversize of the window frame 4 is reduced such that the window frame 4 can be easily fitted and positioned into the recess 3 of the first part 2. Depending particularly on requirements for said shrinking, the window frame 4 for example may be cooled down to temperatures in a range between -50° C, e.g. in a freezing apparatus, down to -200° C, if the window frame 4 is cooled by liquid nitrogen.

After the first part 2 has been formed into its intended shape in step 100, the first part 2 can be positioned into a jig (not shown, e.g. a vacuum jig), for example by using pre-positioning window frame tooling, in a step 400. Steps 300 and 400 can be done one after the other as indicated by Fig. 13. Alternatively, to save time, steps 300 and 400 can be done simultaneously.

The cooled and, thus, shrunk window frame 4 is inserted with particular low resistance into the recess 3 of the first part 2 in a step 500 as shown by Figs. 2 and 4. After being inserted, the window frame 4 is warmed in a step 600, such that the window frame 4 is pressed against the recess 3 of the first part 2. The warming of the window frame 4 leads to an expansion of the window frame 4, such that its external perimeter increases and possible gaps between the window frame 4 and the recess 3 of the first part 2 are filled by the window frame 4. In other words, a "zero gap" is achieved by the above-described shrink fitting and subsequent expansion of the window frame into the recess 3 of the first part 2.

Preferably, the window frame 4 is cooled in step 300 such that its outer perimeter is smaller than the inner perimeter of the recess 3 of the first part 2. In this case, the window frame 4 is inserted into the recess 3 of the first part 2, such that there is an intended gap 5 (Fig. 5) between the recess 3 of the first part 2 and the outer perimeter of the window frame 4. Subsequently, the window frame 4 is warmed such that the outer perimeter of the window frame 4 expands and the gap 5 is filled by the window frame 4.

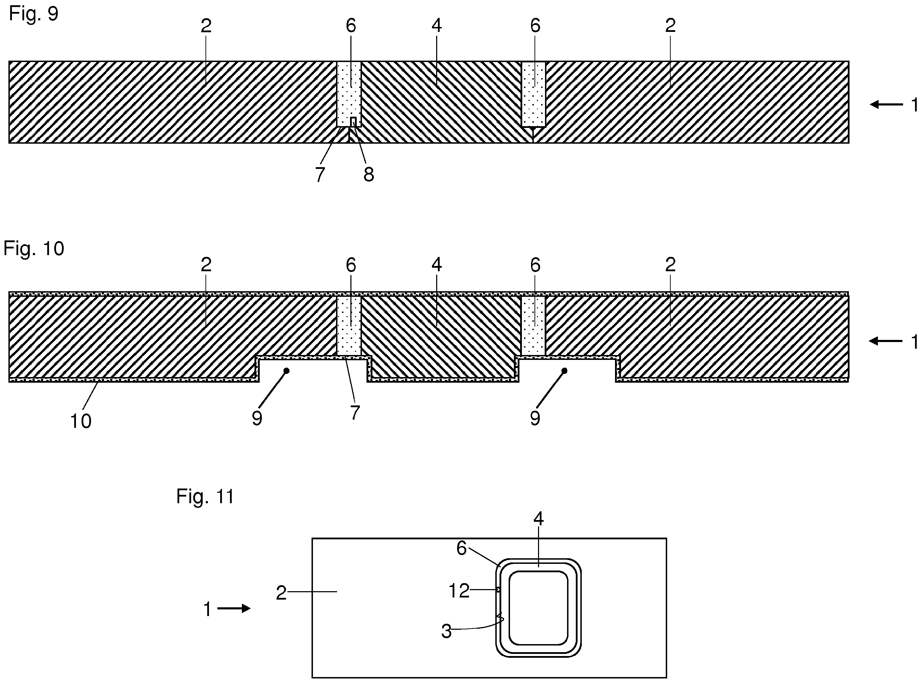

After the window frame 4 has been expended in step 600, the window frame 4 is joined to the first part 2 by means of friction stir welding in a step 700, preferably from the outside. A weld seam 6 (c.f. Figs. 9 to 12) is generated by said friction stir welding, wherein the weld seam 6 consists of material of the first part 2 and of the window frame 4, and wherein the weld seam 6 can surround the window frame 4.

Preferably, as illustrated by Figs. 8 and 10, material of the weld seam 6 is removed in an area of its back surface 7. Fig. 9 shows the weld seam 6 before such a removal of material. In the area of the back surface 7 of the weld seam 6 a lack of penetration (LOP) can occur. This lack of penetration can lead to a crack 8 or several of cracks within the joint between the first part 2 and the second part 4. This crack 8 may lead to a decreased strength of the joint between the first part 2 and the second part 4. However, due to the proposed step of removing material of the weld seam 6 in the area of its back surface 7 of the weld seam 6, the crack 8 as well as a potential LOP can be removed (as shown by Figs. 8 and 10), thus increasing the stability of the joint between the first part 2 and the second part 4.

Preferably, the material is removed during a further pocketing step 800 of the first part 2 and/or the second part 4 and/or the weld seam 6 after step 700. During said pocketing 800, material of the first part 2 and the second part 4 is removed, e.g. by milling, in a surface area of the first part 2, the second part 4 and in the area of the back surface 7 of the weld seam 6, too. The pocketing results into at least one recess 9 in the surface areas in which the material has been removed. These recesses 9 can be called pockets. The pocketing enables to save weight due to the removed material and to remove the crack 8 in one single step 800. In a subsequent step 900 the surface of the first part 2, and the second part 4 and the back surface 7 of the weld seam 6 can be coated with a surface protection layer 10. Preferably before step 900, the joint between the first part 2 and second part 4 can be evaluated by means of a known dye penetrant inspection method.

Furthermore, as shown by Figs. 11 and 12, an end hole 11 being generated by joining the second part 4 to the first part 2 by means of friction stir welding can be closed by a rivet 12 in a step 1000. Such an end hole 11 is typically generated when a respective welding tool (not shown) is drawn out of a welding zone between the first part 2 and the second part 4. This end hole 11 is not desired and, thus, closed by the rivet 12. Although not shown in Fig. 12, the surfaces of the first part 2, the second part 4 and the weld seam 6 can be coated with a surface protection layer 10 as shown by Fig. 10. Although shown after step 900 in Fig. 13, step 1000 may be carried out before the coating step 900.

## Claims

1. A method for joining two parts (2, 4) by friction stir welding, the method comprising the steps of:
providing a first part (2) and a second part (4) to be joined to the first part (2), wherein the first part (2) comprises a recess (3) for receiving the second part (4),
cooling the second part (4) such that the second part (4) shrinks and can be inserted with lower resistance into the recess (3) of the first part (2) compared to a non-shrunk state of the second part (4),
inserting the second part (4) into the recess (3) of the first part (2),
warming the second part (4), such that the second part (4) is pressed against the recess (3) of the first part (4), and
joining the second part (4) to the first part (2) by means of friction stir welding.

2. The method according to claim 1,
wherein the second part (4) is cooled such that an outer perimeter of the second part (4) is smaller than an inner perimeter of the recess (3) of the first part (2),
wherein the second part (4) is inserted into the recess (3) of the first part (2), such that there is a gap (5) between the recess (3) of the first part (2) and the outer perimeter of the second part (4), and
wherein the second part (4) is warmed such that the outer perimeter of the second part (4) expands and the gap (5) is filled by the second part (4).

3. The method according to claim 1 or 2,
wherein the first part (2) and the second part (4) do not comprise a surface protection layer during joining the second part (4) to the first part (2) by means of friction stir welding.

4. The method according to claim 3, the method further comprising the step of
coating a surface of the first part (2) and/or the second part (4) with a surface protection layer (10) after joining the second part (4) to the first part (2) by means of friction stir welding.

5. The method according to one of the preceding claims, wherein the cooling of the second part (4) is carried out in a freezing apparatus.

6. The method according to one of the preceding claims, wherein the second part (4) is cooled by liquid nitrogen.

7. The method according to one of the preceding claims,
wherein a weld seam (6) is generated by joining the second part (4) to the first part (2) by means of friction stir welding,
the method further comprising the step of removing material of the weld seam (6) in an area of a back surface (7) of the weld seam (6).

8. The method according to claim 7, wherein the material is removed during a pocketing of the first part (2) and/or the second part (4) and the weld seam (6) after joining the second part (4) to the first part (2) by means of friction stir welding.

9. The method according to one of the preceding claims,
wherein an end hole (11) is generated by joining the second part (4) to the first part (2) by means of friction stir welding,
the method further comprising the step of closing the end hole (11) by a rivet (12).

10. The method according to one of the preceding claims,
further comprising the step of evaluating the joint of the second part (4) to the first part (2) by means of dye penetrant inspection.

## Patentansprüche

1. Verfahren zum Verbinden von zwei Teilen (2, 4) durch Reibrührschweißen, wobei das Verfahren die folgenden Schritte umfasst:
Vorsehen eines ersten Teils (2) und eines zweiten Teils (4), die mit dem ersten Teil (2) verbunden werden sollen, wobei der erste Teil (2) eine Aussparung (3) zur Aufnahme des zweiten Teils (4) aufweist,
Abkühlen des zweiten Teils (4) derart, dass der zweite Teil (4) schrumpft und mit geringerem Widerstand in die Aussparung (3) des ersten Teils (2) eingeführt werden kann, verglichen mit einem ungeschrumpften Zustand des zweiten Teils (4),
Einsetzen des zweiten Teils (4) in die Aussparung (3) des ersten Teils (2),
Erwärmen des zweiten Teils (4), so dass der zweite Teil (4) gegen die Aussparung (3) des ersten Teils (2) gedrückt wird, und
Verbinden des zweiten Teils (4) mit dem ersten Teil (2) durch Reibrührschweißen.

2. Verfahren nach Anspruch 1,wobei der zweite Teil (4) so gekühlt ist, dass ein Außenumfang des zweiten Teils (4) kleiner ist als ein Innenumfang der Aussparung (3) des ersten Teils (2),
wobei der zweite Teil (4) so in die Aussparung (3) des ersten Teils (2) eingesetzt ist, dass zwischen der Aussparung (3) des ersten Teils (2) und dem Außenumfang des zweiten Teils (4) ein Spalt (5) besteht, und
wobei der zweite Teil (4) derart erwärmt wird, dass sich der Außenumfang des zweiten Teils (4) ausdehnt und der Spalt (5) durch den zweiten Teil (4) ausgefüllt wird.

3. Verfahren nach Anspruch 1 oder 2,
wobei der erste Teil (2) und der zweite Teil (4) beim Verbinden des zweiten Teils (4) mit dem ersten Teil (2) mittels Reibrührschweißen keine Oberflächenschutzschicht aufweisen.

4. Verfahren nach Anspruch 3, wobei das Verfahren weiterhin den Schritt aufweist:
Beschichten einer Oberfläche des ersten Teils (2) und / oder des zweiten Teils (4) mit einer Oberflächenschutzschicht (10) nach dem Verbinden des zweiten Teils (4) mit dem ersten Teil (2) mittels Reibrührschweißen.

5. Verfahren nach einem der vorhergehenden Ansprüche, wobei das Abkühlen des zweiten Teils (4) in einer Gefriervorrichtung durchgeführt wird.

6. Verfahren nach einem der vorhergehenden Ansprüche, wobei der zweite Teil (4) mit flüssigem Stickstoff gekühlt wird.

7. Verfahren nach einem der vorhergehenden Ansprüche,
wobei eine Schweißnaht (6) durch Verbinden des zweiten Teils (4) mit dem ersten Teil (2) mittels Reibrührschweißen erzeugt wird,
wobei das Verfahren ferner den Schritt des Entfernens von Material der Schweißnaht (6) in einem Bereich einer Rückseite (7) der Schweißnaht (6) aufweist.

8. Verfahren nach Anspruch 7, wobei das Material während eines Einsteckens des ersten Teils (2) und / oder des zweiten Teils (4) und der Schweißnaht (6) nach dem Verbinden des zweiten Teils (4) mit dem ersten Teil (2) durch Reibrührschweißen entfernt wird.

9. Verfahren nach einem der vorhergehenden Ansprüche,
wobei ein Endloch (11) durch Verbinden des zweiten Teils (4) mit dem ersten Teil (2) mittels Reibrührschweißen erzeugt wird,
wobei das Verfahren ferner den Schritt des Verschließens des Endlochs (11) durch eine Niete (12) aufweist.

10. Verfahren nach einem der vorhergehenden Ansprüche,
ferner umfassend den Schritt des Bewertens der Verbindung des zweiten Teils (4) mit dem ersten Teil (2) mittels Farbstoffpenetrationsprüfung.

## Revendications

1. Un procédé d'assemblage de deux pièces (2, 4) par soudage par friction-malaxage, le procédé comprenant les étapes consistant à :
prévoir une première pièce (2) et une deuxième pièce (4) destinée à être assemblée à la première pièce (2), la première pièce (2) comprenant un évidement (3) pour recevoir la deuxième pièce (4),
refroidir la deuxième pièce (4) de sorte que la deuxième pièce (4) se rétracte et soit apte à être insérée avec une résistance moindre dans l'évidement (3) de la première pièce (2) comparativement à un état sans rétraction de la deuxième pièce (4),
insérer la deuxième pièce (4) dans l'évidement (3) de la première pièce (2),
chauffer la deuxième pièce (4) de telle sorte que la deuxième pièce (4) soit pressée contre l'évidement (3) de la première pièce (4), et
assembler la deuxième pièce (4) à la première pièce (2) par soudage par friction-malaxage.

2. Le procédé selon la revendication 1,
dans lequel la deuxième pièce (4) est refroidie de telle sorte qu'un périmètre extérieur de la deuxième pièce (4) soit plus petit qu'un périmètre intérieur de l'évidement (3) de la première pièce (2),
dans lequel la deuxième pièce (4) est introduite dans l'évidement (3) de la première pièce (2), de telle sorte qu'il y ait un espace (5) entre l'évidement (3) de la première pièce (2) et le périmètre extérieur de la deuxième pièce (4), et
dans lequel la deuxième pièce (4) est chauffée de telle sorte que le périmètre extérieur de la deuxième pièce (4) se dilate et que l'espace (5) soit rempli par la deuxième pièce (4).

3. Le procédé selon la revendication 1 ou la revendication 2,
dans lequel la première pièce (2) et la deuxième pièce (4) ne comportent pas de couche de protection de surface lors de l'assemblage de la deuxième pièce (4) à la première pièce (2) par soudage par friction-malaxage.

4. Le procédé selon la revendication 3, le procédé comprenant en outre l'étape consistant à
revêtir une surface de la première pièce (2) et/ou de la deuxième pièce (4) d'une couche (10) de protection de surface après assemblage de la deuxième pièce (4) à la première pièce (2) par soudage par friction-malaxage.

5. Le procédé selon l'une des revendications précédentes, dans lequel le refroidissement de la deuxième pièce (4) est effectué dans un appareil de congélation.

6. Le procédé selon l'une des revendications précédentes, dans lequel la deuxième pièce (4) est refroidie par de l'azote liquide.

7. Le procédé selon l'une des revendications précédentes,
dans lequel un cordon de soudure (6) est généré en reliant la deuxième pièce (4) à la première pièce (2) au moyen d'un soudage par friction-malaxage,
le procédé comprenant en outre l'étape consistant à enlever de la matière du cordon de soudure (6) dans une zone d'une surface arrière (7) du cordon de soudure (6).

8. Le procédé selon la revendication 7, dans lequel la matière est enlevée lors d'une mise en poche de la première pièce (2) et/ou de la deuxième pièce (4) et du cordon de soudure (6) après assemblage de la deuxième pièce (4) à la première pièce (2) par soudage par friction-malaxage.

9. Le procédé selon l'une des revendications précédentes,
dans lequel un trou d'extrémité (11) est généré en assemblant la deuxième pièce (4) à la première pièce (2) au moyen d'un soudage par friction-malaxage,
le procédé comprenant en outre l'étape consistant à fermer le trou d'extrémité (11) par un rivet (12).

10. Le procédé selon l'une des revendications précédentes,
comprenant en outre l'étape consistant à évaluer l'assemblage de la deuxième pièce (4) à la première pièce (2) au moyen d'un contrôle par ressuage.
